# FASCICULE DE BREVET EUROPEEN

(11) **EP 0 337 876 B1**
(45) Date de publication et mention de la délivrance du brevet: **24.02.1993**
(21) Numéro de dépôt: 89400991.9
(22) Date de dépôt: 11.04.1989
(51) Int. Cl.: H04L 12/56, H04B 1/16

(54) **Dispositif de réduction de consommation d'énergie pour équipement à fonctionnement cyclique tel que commutateur temporel**
Anordnung zum Vermindern des Energieverbrauchs einer zyklisch arbeitenden Anlage, wie eine Zeitmultiplex-Anlage
Arrangement for reducing the energy drain of a cyclical working equipment such as a time-multiplexed switcher

(30) Priorité: 15.04.1988 FR 8805032
(43) Date de publication de la demande: 18.10.1989
(73) Titulaire: FRANCE TELECOM, 75015 Paris (FR)
(72) Inventeur: Servel, Michel, F-22300 Lannion (FR); Boyer, Pierre, F-22300 Lannion (FR); Quinquis, Jean-Paul, F-22700 Perros-Guirec (FR)
(74) Mandataire: Cabinet Martinet & Lapoux

(56) Documents cités:
- EP-A- 0 113 307
- EP-A- 0 113 639
- EP-A- 0 200 275
- DE-A- 3 123 618
- PATENT ABSTRACTS OF JAPAN, vol. 5, no. 181 (E-83)[853], 20 novembre 1981 & JP-A-56 107 685

## Description

La présente invention concerne de manière générale la réduction de l'énergie consommée par des équipements électroniques. Plus particulièrement, l'invention concerne la réduction de l'énergie consommée par des équipements électroniques présentant un fonctionnement cyclique géré par une base de temps et dans lesquels la consommation d'énergie est réductible par blocage de la base de temps pendant des périodes de rupture de charge. De tels équipements sont par exemple des commutateurs temporels de paquets asynchrones en technologie de type MOS (Metal Oxyde Semiconductor).

La technologie MOS, ou CMOS, est de plus en plus utilisée pour des circuits électroniques de toutes natures. En effet, un circuit en technologie MOS a l'avantage d'une consommation très réduite. La consommation d'un circuit logique en technologie MOS est sensiblement proportionnelle au nombre de transitions de niveau logique établies dans le circuit et est négligeable lorsque le circuit est au repos, c'est-à-dire en l'absence de transitions de niveau. Pour les équipements électroniques à fonctionnement cyclique, tels par exemple que des multiplexeurs, démultiplexeurs et commutateurs temporels, et réalisés en technologie MOS, un procédé pour réduire leur consommation d'énergie consiste à bloquer leur fonctionnement cyclique pendant des périodes de rupture de charge, c'est-à-dire pendant des périodes au cours desquelles les équipements n'ont pas à traîter des signaux d'information, afin de ne pas engendrer des transitions de niveau inutiles et consommatrices d'énergie.

La présente invention vise à fournir un dispositif de réduction de consommation d'énergie pour des équipements électroniques, fonctionnant selon le procédé évoqué ci-dessus.

A cette fin, un dispositif selon l'invention est tel que défini par la revendication 1.

Un dispositif selon l'invention plus spécifiquement conçu pour un commutateur temporel de paquets est tel que défini par la revendication 2.

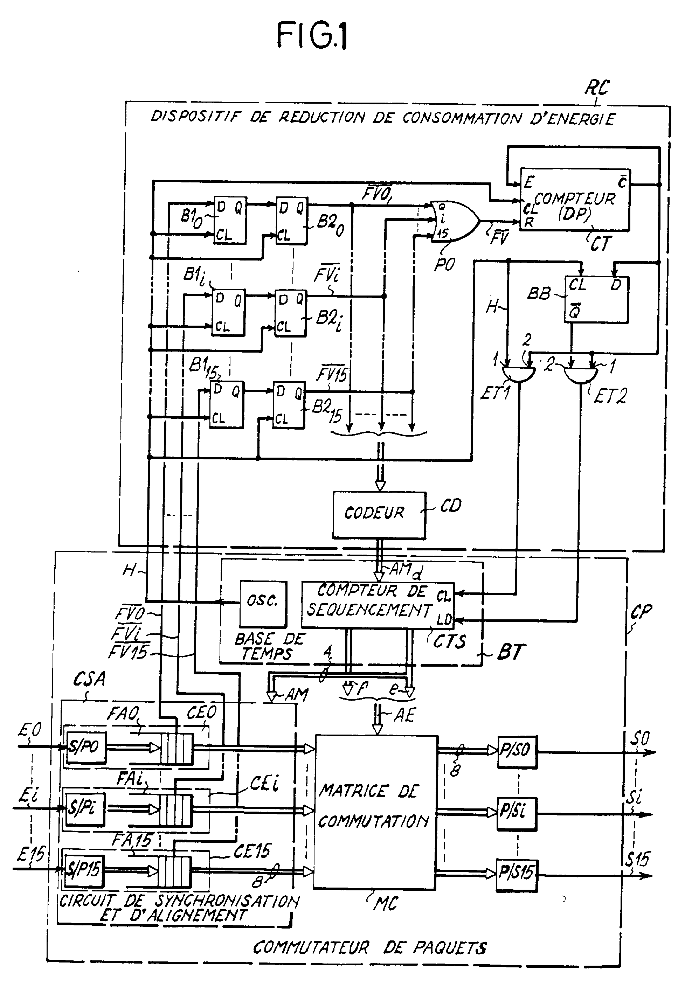

D'autres avantages et caractéristiques de l'invention apparaîtront plus clairement à la lecture de la description suivante d'une réalisation préférée de l'invention en référence à la figure unique annexée correspondante.

En référence à la figure, un dispositif de réduction de consommation d'énergie RC selon l'invention est par exemple associé à un commutateur temporel de paquets asynchrones CP de type à conversion paragonale tel que décrit dans le brevet FR-B-2538976.

Le commutateur de paquets CP comprend par exemple I=16 multiplex temporels entrants E0 à E15 et I=16 multiplex temporels sortants S0 à S15. Les multiplex entrants E0 à E15 sont connectés à un circuit de synchronisation et d'alignement de paquets CSA dans le commutateur CP. Le circuit CSA comprend I=16 circuits d'entrée identiques CE0 à CE15 respectivement associés aux multiplex entrants E0 à E15. Un circuit d'entrée CEi, où i est un indice entier compris entre 0 et I-1=15, comprend essentiellement un convertisseur série-parallèle S/Pi et une file tampon d'alignement FAi. Le convertisseur S/Pi reçoit, sous forme de bits en série, des paquets entrants asynchrones délivrés par le multiplex Ei et incluant chacun un nombre prédéterminé d'octets. Le convertisseur S/Pi fournit en sortie les paquets sous forme d'octets en série. Les octets de paquets délivrés par le convertisseur S/Pi sont mémorisés par ordre chronologique d'arrivée dans la file d'alignement FAi0. Les files FA0 à FA15 ont pour fonction de compenser des décalages temporels dûs à l'asynchronisme des paquets. Dans chaque file d'alignement FAi, une sortie reliée au dispositif RC délivre un signal de signalisation de remplissage de file F̅V̅i ayant un état logique "0" lorsque la file FAi est vide, c'est-à-dire lorsqu'elle ne contient aucun paquet, et ayant un état logique "1" lorsque la file FAᵢ n'est pas vide, c'est-à-dire lorsqu'elle contient au moins un paquet.

Les files FA0 à FA15 transfèrent cycliquement des octets de paquets vers I=16 ports d'entrée d'une matrice de commutation de paquets MC du commutateur CP. Les transferts d'octets des files d'alignement FA0 à FA15 vers la matrice MC sont commandés par une base de temps BT du commutateur CP commandant également des opérations de commutation de paquets réalisées dans la matrice MC. A cette fin, la base de temps BT délivre cycliquement I=16 adresses de sélection de multiplex AM="0000" à AM="1111" dans un bus de séquencement e à 4 fils connecté au circuit de synchronisation et d'alignement CSA et à la matrice de commutation MC. Les adresses AM sont fournies par quatre sorties de poids faible de la base de temps BT correspondant respectivement à 4 sorties de 4 bascules de poids faible incluses dans un compteur de séquencement CTS de la base de temps BT. La base de temps BT délivre également par des sorties de poids fort connectées à un bus f des compléments d'adresse qui sont ajoutés aux adresses de multiplex AM pour former des adresses d'écriture AE délivrées à une mémoire tampon (non représentée) de la matrice de commutation MC dans laquelle sont stockés temporairement les paquets en cours de commutation. La matrice de commutation MC délivre des paquets sortants octet par octet par I=16 ports de sortie reliés aux I=16 multiplex sortants S0 à S15 respectivement à travers I=16 convertisseurs parallèle-série P/S0 à P/S15.

Le dispositif de réduction de consommation d'énergie RC comprend I=16 couples de bascules en cascade B1₀, B2₀ à B1₁₅, B2₁₅, une porte OU à I=16 entrées PO, un compteur binaire CT, deux portes ET à 2 entrées chacune ET1 et ET2, une bascule BB, et un codeur CD.

La base de temps BT du commutateur CP comprend un oscillateur OSC délivrant un signal d'horloge H dont la fréquence F détermine un rythme de transfert d'octet dans le commutateur CP. Le signal H est appliqué à des entrées d'horloge CL des bascules B1₀, B2₀ à B1₁₅, B2₁₅, de la bascule BB et du compteur CT, et à une première entrée 1 de la porte ET1.

Les couples de bascules B1₀, B2₀ à B1₁₅, B2₁₅ sont respectivement reliés aux files d'alignement FA0 à FA15 et ont pour fonction de détecter de manière synchrone, sur des fronts du signal H, des états "file vide" des files FA0 à FA15. Une fonction secondaire des couples de bascules B1₀, B2₀ à B1₁₅ B2₁₅ est d'assurer un filtrage par échantillonnage à la fréquence F des signaux F̅V̅0̅ à F̅V̅1̅5̅ afin d'éliminer d'éventuels parasites dans ces signaux. Les signaux F̅V̅0̅ à F̅V̅1̅5̅ sont respectivement appliqués à des entrées de données D des bascules B1₀ à B1₁₅. Des sorties Q des bascules B1₀ à B1₁₅ sont respectivement connectées à des entrées de données D des bascules B2₀ à B2₁₅. Des sorties Q des bascules B2₀ à B2₁₅ délivrent respectivement les signaux synchronisés F̅V̅0̅ à F̅V̅1̅5̅ à I=16 entrées 0 à 15 de la porte PO et à I=16 entrées du codeur CD. Une sortie de la porte PO est reliée à une entrée de remise à zéro R du compteur CT et fournit à l'entrée R un signal F̅V̅ qui est à l'état "0" dans le cas où toutes les files d'alignement FA0 à FA15 sont vides et qui est à l'état "1" dans le cas contraire.

Le compteur CT est un compteur binaire dont la fonction est de produire un délai de durée prédéterminée DP. La capacité N du compteur CT est déterminée en fonction de la fréquence F du signal H et de la durée DP. La durée DP est prévue au moins égale à la durée maximale nécessaire au commutateur CP pour commuter un paquet entrant dans la matrice MC entre un multiplex entrant quelconque et au moins un multiplex sortant quelconque, c'est-à-dire égal à la durée maximale entre l'écriture et la lecture d'un paquet dans la matrice MC. Après remise à zéro par le signal F̅V̅="1", puis disposition de ce dernier le compteur CT est incrémenté au rythme du signal H appliqué à l'entrée CL. Au terme de la durée DP=N/F, le compteur CT atteint une capacité maximale N et déborde. Le débordement du compteur CT est signalé par une transition à l'état "0" d'une sortie de débordement C̅, appelée également sortie de retenue, du compteur CT. La sortie C̅ est bouclée sur une entrée de validation de comptage E du compteur qui, à l'état "1", autorise un comptage des impulsions d'horloge H dans le compteur CT. Lorsque le compteur CT atteint la capacité maximale N, il est bloqué par la transition vers l'état "0" de la sortie C̅.

La sortie C̅ du compteur CT est également reliée à une entrée de données D de la bascule BB, à une seconde entrée 2 de la porte ET1, et à une première entrée 1 de la porte ET2. Une seconde entrée 2 de la porte ET2 est connectée à une sortie complémentaire Q̅ de la bascule BB. Des sorties des portes ET1 et ET2 sont connectées respectivement à une entrée d'horloge CL et une entrée de commande de chargement LD du compteur de séquencement CTS dans la base de temps BT.

Tant que l'une au moins des files d'alignement FA0 à FA15 n'est pas vide et contient un ou plusieurs paquets non encore transférés vers la matrice de commutation MC, le signal F̅V̅ délivré par la porte PO est à l'état "1" et le compteur CT est maintenu initialisé à zéro. La sortie C̅ du compteur CT est à l'état "1", la porte ET1 est ouverte et le signal H est appliqué à l'entrée d'horloge CL du compteur de séquencement CTS et commande l'incrémentation des adresses AM fournies par celui-ci. Le commutateur CP fonctionne normalement de manière cyclique. Lorsqu'à la suite du transfert d'un dernier paquet entrant d'une file FAi vers la matrice MC, signalant une rupture de charge imminente du commutateur de paquets CP, les files d'alignement FAO à FA15 sont toutes vides, le signal F̅V̅ vient à l'état "0" et débloque le compteur CT qui est alors incrémenté par le signal H. Lorsque le compteur CT atteint sa capacité maximale N, la durée DP=N/F s'est écoulée depuis le transfert dudit dernier paquet vers la matrice MC et celle-ci a terminé de le commuter vers au moins l'un des multiplex sortants S0 à S15. La sortie C̅ du compteur CT vient à l'état "0", bloque le compteur CT et ferme la porte ET1. Le compteur de séquencement CTS ne reçoit plus le signal d'horloge H et est bloqué à la dernière adresse AE fournie. Le fonctionnement du commutateur CP est interrompu et donc en rupture de charge. Plus aucune transition de signal n'a lieu dans le commutateur CP et sa consommation est très réduite.

L'état "0" de la sortie C̅ du compteur CT est écrit dans la bascule BB, et la sortie complémentaire Q̅ de la bascule BB, fournit un état "1" qui ouvre la porte ET2. Par la suite, lorsque un ou plusieurs nouveaux paquets entrants sont reçus dans les files d'alignement FA0 à FA15, le signal F̅V̅ revient à l'état "1", et initialise et bloque à zéro le compteur CT. La sortie C̅ du compteur CT commute à l'état "1" et cet état "1" est appliqué à travers la porte ET2 ouverte à l'entrée de commande de chargement LD du compteur de séquencement CTS. Une adresse de multiplex de redémarrage AM_{d} à 4 bits délivrée par le codeur CD est appliquée à des entrées de données du compteur de séquencement CTS et est chargée dans 4 bascules de poids faible du compteur CTS pour être fournie dans le bus de séquencement e. Parallèlement, la porte ET1 est également ouverte par l'état "1" à la sortie C̅ du compteur CT et le signal d'horloge H est à nouveau fourni au compteur de séquencement CTS qui redémarre à partir de l'adresse AM_{d}. Le commutateur CP reprend son fonctionnement.

Le codeur CD élabore l'adresse AM_{d} en fonction des états des signaux synchronisés FV0 à F̅V̅I̅5̅ délivrés par les bascules B2₀ à B2₁₅. Le codeur CD comprend une logique interne de gestion de priorités lui permettant d'élaborer l'adresse AM_{d} en tenant compte de priorités différentes respectivement affectées aux multiplex entrants E0 à E15. Par exemple, on suppose qu'après un arrêt de fonctionnement du commutateur CP, des nouveaux paquets entrants sont reçus dans les files FA1 et FA3, et qu'au multiplex E1 est affectée une priorité supérieure à celle affectée au multiplex E3. Le codeur CD reçoit alors en entrée les signaux F̅V̅0̅="0", F̅V̅1̅="1", F̅V̅2̅="0", F̅V̅3̅="1", F̅V̅4̅="0"... F̅V̅1̅5̅="0", et délivre en sortie l'adresse AM_{d}="0001" correspondant au multiplex de priorité supérieure E1 ayant transmis des paquets. L'adresse AM=AM_{d}="0001" est chargée au redémarrage dans le compteur de séquencement CTS et est délivrée dans le bus e. Cette adresse AM_{d} délivrée dans le bus e sélectionne la file FA1 et l'invite à transférer un premier paquet entrant vers la matrice de commutation MC. Les files FA2, FA3... etc... sont ensuite sélectionnées successivement au fur et à mesure de l'incrémentation du compteur CTS pour transférer des paquets.

Selon une réalisation simplifiée du dispositif selon l'invention, le codeur CD ainsi que la bascule BB et la porte ET2 sont supprimés. Dans cette réalisation simplifiée, le compteur de séquencement CTS reprend son comptage, lors d'un redémarrage, à partir de l'adresse à laquelle il était bloqué.

## Revendications

1. Dispositif pour réduire la consommation d'énergie d'un équipement à fonctionnement cyclique (CP) commandé par une base de temps (BT) et ayant des périodes de rupture de charge, caractérisé en ce qu'il comprend:
- des moyens (B1ᵢ, B2ᵢ, PO) reliés audit équipement pour détecter le début et la fin de chaque période de rupture de charge de l'équipement,
- des moyens (CT, ET1, R="0", C̅="0") reliés auxdits moyens pour détecter (B1ᵢ, B2ᵢ, PO) pour bloquer ladite base de temps (BT) par suppression d'un signal d'horloge (H) fourni à la base de temps (BT) à la fin d'un délai de durée prédéterminée (DP) succédant au début d'une période de rupture de charge détectée, et
- des moyens (CT, ET1, R="1", C̅="1") reliés auxdits moyens pour détecter (B1ᵢ, B2ᵢ, PO) pour débloquer la base de temps (BT) par restitution du signal d'horloge (H) à la base de temps (BT) en réponse à la fin d'une période de rupture de charge détectée.

2. Dispositif conforme à la revendication 1 pour lequel ledit équipement est un commutateur temporel de paquets (CP) dans lequel I multiplex temporels entrants (E0 à E15), où I est un entier au moins égal à 1, sont respectivement connectés à I files tampons d'entrée (FA0 à FA15) et délivrent des paquets à stocker temporairement dans lesdites files en attente d'être commutés par ledit commutateur, caractérisé en ce que:
- la durée (DP) dudit délai à la fin duquel est bloquée la base de temps (BT) est au moins égale à la durée maximale nécessaire au commutateur (CP) pour commuter un paquet, et en ce que
- lesdits moyens pour détecter (B1ᵢ, B2ᵢ, PO) sont reliés à chacune des I files (FA0 à FA15) et détectent le début et la fin d'une période de rupture de charge en fonction de I signaux de signalisation de remplissage de file (F̅V̅0̅ à F̅V̅1̅5̅) qui sont délivrés respectivement par les I files (FA0 à FA15) et qui indiquent chacun des états de remplissage, vide ("0") et plein ("1") de la file correspondante.

3. Dispositif conforme à la revendication 2, caractérisé en ce que les moyens pour bloquer (CT, ET1, R="0", C̅="0") comprennent un compteur (CT) pour déterminer la fin dudit délai par comptage d'un nombre déterminé (N) d'impulsions du signal d'horloge (H) correspondant à ladite durée (DF=N/F), ledit comptage étant déclenché par lesdits moyens pour détecter (B1ᵢ, B2ᵢ, PO) dès que tous les signaux de signalisation (F̅V̅0̅ à F̅V̅1̅5̅) sont à l'état de remplissage vide ("0").

4. Dispositif conforme à la revendication 2 ou 3, caractérisé en ce que les moyens pour détecter (B1ᵢ, B2ᵢ, OU) comprennent des moyens à bascules (B1ᵢ, B2ᵢ) pour synchroniser et filtrer les I signaux de signalisation (F̅V̅0̅ à F̅V̅1̅5̅) par échantillonnage à la fréquence (F) du signal d'horloge (H).

5. Dispositif conforme à l'une quelconque des revendications 2 à 4, caractérisé en ce que les moyens pour débloquer comprennent des moyens pour initialiser (CD, BB, ET2) la base de temps (BT) à un état (MA_{d}) déterminé en fonction d'états des signaux de signalisation (F̅V̅0̅ à F̅V̅1̅5̅) détectés par les moyens pour détecter (B1ᵢ, B2ᵢ, PO) et de priorités affectées aux files (FA0 à FA15), afin que le commutateur (CP) démarre au déblocage de la base de temps (BT) par la commutation d'un premier paquet stocké dans la file non vide ayant la priorité la plus élevée.

## Patentansprüche

1. Vorrichtung zur Herabsetzung des Energieverbrauchs einer Einrichtung mit zyklischer Funktion (CP), die durch eine Zeitbasis (BT) gesteuert ist und Ladungsunterbrechungsperioden aufweist, dadurch **gekennzeichnet**, daß sie umfaßt:
- mit der Einrichtung verbundene Mittel (B1ᵢ, B2ᵢ, PO) zur Erfassung des Beginns und des Endes jeder Ladungsunterbrechungsperiode der Einrichtung,
- Mittel (CT, ET1, R="0", C̅="0"), die mit den Mitteln zum Erfassen (B1ᵢ, B2ᵢ, PO) verbunden sind, um die Zeitbasis (BT) durch Unterdrückung eines Taktsignals H zu sperren, das der Zeitbasis BT am Ende einer Verzögerung mit vorbestimmter Dauer (DP) geliefert wird, folgend auf den Beginn einer erfaßten Ladungsunterbrechungsperiode, und
- Mittel, (CT, ET1, R="1", C̅="1"), die mit den Mitteln zum Erfassen (B1ᵢ, B2ᵢ, PO) verbunden sind, um die Zeitbasis (BT) durch Wiederherstellung des Taktsignals (H) bei der Zeitbasis (BT) ansprechend auf das Ende einer erfaßten Ladungsunterbrechungsperiode freizugeben.

2. Vorrichtung nach Anspruch 1, für die die Einrichtung ein Paketzeitschalter (CP) ist, in dem (I) eingehende Zeitmultiplexe E0 bis E15, wobei I eine ganze Zahl wenigstens gleich 1 ist, jeweils mit I Eingangspufferspeichern (FA0 bis FA15) verbunden sind und den Files vorübergehend zu speichernde Pakete in Erwartung der Schaltung durch den Schalter liefern, dadurch **gekennzeichnet**, daß
- die Dauer (DP) der Verzögerung, an deren Ende die Zeitbasis (BT) gesperrt wird, wenigstens gleich der für den Schalter (CP) erforderlichen maximalen Zeitdauer zum Schalten eines Pakets ist, und daß
- die Mittel zum Erfassen (B1ᵢ, B2ᵢ, PO) mit jedem der I-Files (FA0 bis FA15) verbunden sind und den Beginn und das Ende einer Ladungsunterbrechungsperiode abhängig von I Signalen zur Anzeige der Fileauffüllung (F̅V̅0̅ bis F̅V̅1̅5̅) erfassen, die jeweils durch die I-Files (FA0 bis FA15) geliefert werden und die jeweils Auffüllzustände leer ("0") und voll ("1") des entsprechenden Files anzeigen.

3. Vorrichtung nach Anspruch 2, dadurch **gekennzeichnet**, daß die Mittel zum Sperren (CT, ET1, R="0", C̅="0") einen Zähler (CT) zur Bestimmung des Endes der Verzögerung durch Zählung einer vorbestimmten Zahl (N) von Impulsen des Taktsignals (H) entsprechend der Dauer (DF=N/F) umfassen, wobei die Zählung durch die Mittel zum Erfassen (B1ᵢ, B2ᵢ, PO) ausgelöst wird, sobald sich sämtliche Anzeigesignale (F̅V̅0̅ bis F̅V̅1̅5̅) im Auffüllzustand leer ("0") befinden.

4. Vorrichtung nach Anspruch 2 oder 3, dadurch **gekennzeichnet,** daß die Mittel zum Erfassen (B1ᵢ, B2ᵢ, ODER) Kippschaltungsmittel (B1ᵢ, B2ᵢ) umfassen, um die I Anzeigesignale (F̅V̅0̅ bis F̅V̅1̅5̅) durch Abtastung mit der Frequenz (F) des Taktsignals (H) zu synchronisieren und zufiltern.

5. Vorrichtung nach einem beliebigen der Ansprüche 2 bis 4, dadurch **gekennzeichnet**, daß die Mittel zum Freigeben Mittel zum Initialisieren (CD, BB, ET2) der Zeitbasis (BT) in einem abhängig von Zuständen der durch die Mittel zum Erfassen (B1ᵢ, B2ᵢ, PO) erfaßten Anzeigesignalen (F̅V̅0̅ bis F̅V̅1̅5̅) und von den Files (FA0 bis FA15) zugeordneten Prioritäten umfassen, damit der Schalter (CP) bei Freigabe der Zeitbasis (BT) durch die Schaltung eines in dem die höchste Priorität aufweisenden, nicht leeren File gespeicherten ersten Pakets startet.

## Claims

1. Device for reducing the power consumption of a cyclically operating equipment (CP) controlled by a time base (BT) and having periods of load interruption, characterized in that it comprises :
- means (B1ᵢ, B2ᵢ, PO) connected to said equipment for detecting the beginning and end of each load interruption period of the equipment ,
- means (CT, ET1, R="0", C̅="0") connected to said detecting means (B1ᵢ, B2ᵢ, PO) for inhibiting said time base (BT) by suppression of a clock signal (H) supplied to the time base (BT) at the end of a period of predetermined duration (DP) following the beginning of a detected period of load interruption, and
- means (CT, ET1, R="1", C̅="1") connected to said detecting means (B1ᵢ, B2ᵢ, PO) for freeing the time base (BT) by restitution of the clock signal (H) to the time base (BT) in response to the end of a detected period of load interruption.

2. Device according to claim 1 for which said equipment is a packet time-division switch (CP) in which I incoming time-division multiplex-ways (E0 to E15), whereby I is an integer equal to at least 1, are respectively connected to I input buffer queues (FA0 to FA15) and issue packets to be temporarily stored in said queues while waiting to be switched by said switch, characterized in that :
- the duration (DP) of said period, at the end of which the time base (BT) is inhibited, is at least equal to the maximum duration of time required by the switch (CP) to switch a packet, and in that
- said detecting means (B1ᵢ, B2ᵢ, PO) are connected to each of the I queues (FA0 to FA15) and detect the beginning and end of a load interruption period as a function of I queue filling signalization signals (F̅V̅0̅ to F̅V̅1̅5̅) which are respectively issued by the I queues (FA0 to FA15) and which each indicate filling states, empty ("0") and full ("1"), of the corresponding queue.

3. Device according to claim 2, characterized in that the inhibiting means (CT, ET1, R="0", C̅="0") comprise a counter (CT) to determine the end of said period by counting of a set number (N) of impulses of the clock signal (H) corresponding to said duration of time (DF=N/F), said counting being activated by said detecting means (B1ᵢ, B2ᵢ, PO) as soon as all the signalization signals (F̅V̅0̅ to F̅V̅1̅5̅) are in the empty filling state ("0").

4. Device according to claim 2 or 3, characterized in that the detecting means (B1ᵢ, B2ᵢ, OU) comprise flip-flop means (B1ᵢ, B2ᵢ) for synchronizing and filtering the I signalization signals (F̅V̅0̅ to F̅V̅1̅5̅) by sampling at the frequency (F) of the clock signal (H).

5. Device according to any one of claims 2 to 4, characterized in that the freeing means comprise means (CD, BB, ET2) for initializing the time base (BT) at a set state (MA_{d}) as a function of states of the signalization signals (F̅V̅0̅ to F̅V̅1̅5̅) detected by the detecting means (B1ᵢ, B2ᵢ, PO) and of priorities assigned to the queues (FA0 to FA15) so that the switch (CP) starts when the time base (BT) is freed by the switching of a first packet stored in the not-empty queue having the highest priority.
